# EUROPEAN PATENT APPLICATION

(11) **EP 2 887 282 A1**
(43) Date of publication of application: **24.06.2015**
(21) Application number: 13306760.3
(22) Date of filing: 18.12.2013
(51) Int. Cl.: G06Q 10/06

(54) **Method for performing technical interventions on technical plants or devices in an environment with a risk factor, computer program and system implementing the method**

(71) Applicant: Oreka Sud, 30200 Bagnols/Ceze (FR)
(72) Inventor: Ardellier, Luc, 30200 Saint Gervais (FR); Chartier, Yann, 30126 Saint Laurent Des Arbres (FR); Rodi, Claude, 30400 Villeneuve Lez Avignon (FR); Testard, Vincent, 30200 Bagnols/Ceze (FR)
(74) Representative: Pontet Allano & Associes

(57) **Abstract**

The present invention concerns a method for performing a technical intervention on a technical plant or a technical device comprising a plurality of components in an environment with a risk factor, said method comprising steps of (i) definition, by simulation using a tridimensional representation of said plant, of at least one scenario (52) comprising a sequence of operations, so-called unitary operations (53), each unitary operation (53) corresponding to an intervention on at least one component of said plant, (ii) determination of at least one data representing a consequence of at least one scenario (52), said consequence comprising an exposure to said risk factor.

The present invention concerns also a computer program and a system for carrying the method.

## Description

### Field of the invention

The invention relates to a method for performing technical interventions such as construction, maintenance, upgrade, renovation, and/or dismantling on technical plants or devices in an environment with a risk factor. It relates also to a computer program and a system implementing the method.

The field of the invention is the field of the methods for the management of technical interventions in hazardous environments, and in particular for dismantling of industrial sites such as nuclear plant sites and chemical plants sites, or for the dismantling of large technical devices such as airplanes or boats.

### Background of the invention

Technical interventions such as construction, maintenance, upgrade, renovation and/or dismantling operations of nuclear or chemical plants, or more generally of technical installations, plants or devices which involve risks of contamination of the environment and/or of the operators or explosion risks, require these risks to be correctly handled during and after the technical intervention.

Radioactive, chemical or explosive wastes (for instance) generated by the operations must be processed correctly in order to neutralize or master these risks.

At the same time, the costs and the duration of the intervention must be minimized.

Industrial plants present very complex architectures in which the different components are strongly interconnected. It is thus very difficult to plan a technical intervention so as to reduce the cost and the duration of operations, while also minimizing potential hazards (contamination, explosion, chemical ...). Furthermore, errors which may be done in the planned sequence of operations or during the realization of an operation by an operator may have severe consequences for the operator or for the environment.

At the moment, there is no efficient method or tool for assisting or guiding the actors in this domain to plan interventions on such plants with potential hazards for operators or environment, while taking into account costs, durations, risks and wastes minimization.

The same issues are encountered in the dismantling of large technical devices in aeronautics or naval domains, or terrestrial vehicles, such as aircrafts, boats, submarines, trains, trucks, cars....

The invention leads to overcome overcoming these problems.

In particular, the purpose of the invention is to provide a method and a tool which allow determining, or even minimizing, the costs, the duration and/or the wastes of a technical intervention in a technical or an industrial plant, or a technical item.

The purpose of the invention is also to provide a method and a tool which allow lowering or even minimizing the risks relative to such technical intervention.

The purpose of the invention is also to provide a method and a tool which allow determining accurately the costs, the duration and/or the wastes of such technical intervention, as well as the risks.

### Summary of the invention

Such purposes are accomplished through a method for performing a technical intervention on a technical plant or a technical device comprising a plurality of components in an environment with a risk factor, said method comprising steps of:
- definition, by simulation using a tridimensional representation of said plant, of at least one scenario comprising a sequence of operations, so-called unitary operations, each unitary operation corresponding to an intervention on at least one component of said plant,
- determination of at least one data representing a consequence of at least one scenario, said consequence comprising an exposure to said risk factor, said determination comprising steps of:
   (a) for at least one unitary operation of said scenario:
      (i) division of said unitary operation in a sequence of tasks, so-called elementary tasks, in function of data relative to said unitary operation,
      (ii) for at least one elementary task, determination of at least one data set representing a consequence of said elementary task in function of data relative to the component concerned by said elementary task, data relative to the nature of said elementary task, and data relative to the environment of realization of said elementary task,
      (iii) determination of at least one data set representing a consequence of said unitary operation, in function of at least one data set representing a consequence of at least one elementary task,
   (b) determination of at least one data set representing a consequence of said at least one scenario, in function of at least one data set representing a consequence of at least one unitary operation of said scenario.

The method of the invention may be applied for technical interventions such as construction, maintenance, upgrade, renovation, ecological designand/or dismantling of any relevant technical or industrial plants or technical device, such as:
- nuclear plants or nuclear sites,
- chemical plants or chemical sites (with a chemical risk factor),
- industrial sites submitted to or inducing environmental risks or explosion risks,
- power plants (nuclear, hydroelectric, using coal),
- large technical devices in aeronautics, naval domain or terrestrial vehicles, such as airplanes, boats, submarines, trains, cars, trucks.

Risk factors which may be encountered may comprise, for instance:
- ionizing radiations,
- radiological or radioactive contamination,
- chemical risks,
- fire related or explosive risks,
- biological, bacteriological and/or viral risks (in a medical research facilities for instance),
- carcinogenic products,
- contaminating products.

According to the invention, a technical intervention on a technical or industrial plant or a technical device may be represented or modeled by a sequence of numerical entities representing each a unitary operation and making up a scenario of the intervention.

In the same way, each unitary operation may be represented or modeled by a sequence of numerical entities representing each an elementary task (or a single numerical entity representing an elementary task).

According to the invention, a physical entity representing an unitary operation or an elementary task may be represented by a set of numerical data comprising some input data, some output data, and at least one numerical function relating the input data to the output data.

These numerical entities representing an unitary operation or an elementary task may advantageously be determined on the basis of a physical approach, using physical, mechanical, chemical modeling of the operations to be done.

In the same way, according to the invention, a component of the industrial or technical plant or an element of the environment such as a radiation source, a source of potential explosion or a chemical source, may be represented by a set of numerical data which model that component or that element.

The so-called "consequences" of scenarios, unitary operations and elementary tasks are information which are derived from the computed output data of the numerical entities, and comprise the information which are expected for evaluating the effect or the impact of the corresponding tasks or sequences of task, for instance in terms of time, cost, wastes, exposure to risk factor...

Advantageously, the method of the invention allows determining, prior to the execution of the technical intervention, the consequences of such intervention. It also allows to plan the actions to do before, during and after the intervention. So, it is possible to evaluate and quantify precisely the risks related to the intervention, the duration, the cost, the waste....

It is also possible with the method of the invention to define a plurality of scenarios of intervention and to select the best scenario according to its consequences.

As a result, the method of the invention allows on one hand to determine accurately the costs, the duration, the wastes ... of the intervention, and on the other hand to lower or even minimize these results.

According to the invention, a pre-determined sequence of elementary tasks may be associated with an unitary operation. That sequence may comprise tasks in series, that is at least two related tasks, and/or tasks made in parallel, that is at least two tasks made, at least partially, at the same time.

Advantageously, the method of the invention may comprise a modification of the content of at least one unitary operation by adding, removing or modifying at least one elementary task of the predetermined sequence.

For instance, a "standard" predetermined sequence of elementary tasks may be customized or modified to adapt to a specific configuration, in function of information relative to the plant, and/or a component of the plant concerned by the elementary operation.

According to some modes of implementation of the invention, for at least one scenario, the step of determination of at least one data set representing a consequence of said scenario may be done at the same time as the definition of the scenario, said at least one consequence data set being updated along the definition of the scenario.

In other words, when an unitary operation is added to a scenario, or removed from a scenario, or when an unitary operation of a scenario is modified, the step of determination of at least one consequence data set of said scenario may be done immediately, and said at least one consequence data set may be updated simultaneously.

Thus, during the operations' planning or the construction of a scenario, it is possible to test several unitary operations or several versions of a unitary operation, and to choose the one for which a given consequence parameter is optimized, such as the cost, the duration, the wastes and/or a contamination/explosion risk. In such mode of implementation, the method of the invention allows a better flexibility.

According to modes of implementation in which the method of the invention is executed for a plurality of scenarios, said method may further comprising a step of selection of at least one scenario among a plurality of scenarios by comparison of the data sets representing the consequences of each of said scenarios.

In such mode of implementation, the method of the invention and in particular the steps of definition of a scenario and of determination of the data set(s) representing the consequences of said scenario may be repeated for several intervention scenarios.

The method of the invention may then further comprise a step of selecting a scenario among a plurality of already-defined scenarios by comparing computed data sets representing consequences of said scenarios. These compared consequences may comprise parameters such as cost, duration, and/or risk.

According to some modes of implementation, a sequence of elementary tasks of an unitary operation may be further arranged depending on data relative to the environment of realization of said unitary operation.

Indeed, the environmental conditions, or context information, may require modifications or adaptations of the proceedings and the content of a sequence of elementary tasks of an unitary operation.

For instance, the sequence of elementary tasks representing an operation of cutting of a tank with radioactive materials comprises an elementary task consisting in equipping the operator (human or robot) of suitable protections again the ionizing radiations, whereas the sequence of elementary tasks representing an operation of cutting of a tank containing water does not comprise that elementary task.

According to the invention, the definition of an unitary operation part of a scenario may comprise:
- a move of an avatar corresponding to a human operator, a team and/or a machine in the tridimensional environment representing the plant or the device,
- a selection of an intervention to be executed on a component of said plant or device, and
- a contextualization of said selected intervention in function of data relative to said component and/or to the environment of realization.

According to an example of implementation:
- the user commands the move of the avatar in the tridimensional environment using an interaction tool or a man machine interface (MMI), such as a mouse or a touchscreen, by indicating the path to follow;
- the displacement(s) of the avatar are recorded;
- the user selects the component on which the operation must be done, in the tridimensional environment; and
- the user selects the operation to be done on the component.

Of course, these actions may be done as listed or in a different order.

The data sets representing a consequence of an elementary task or a unitary operation or a scenario may comprise data relative to at least one of the following:
- a duration of realization,
- an amount of generated wastes,
- physical characteristics of a generated waste,
- a cost of realization,
- a radiological contamination rate,
- a chemical contamination rate.

The data relative to a component of the plant may comprise data relative to at least one of the following:
- the physical characteristics of the component,
- the dimensions of the component ,
- a matter of the component,
- the localization of the component,
- at least one function of the component,
- at least relation of said component with at least one other component of said plant.

The data relative to an elementary task may comprise data relative to at least one of the following:
- a mode of operation,
- a tool for executing the task,
- a preceding or subsequent elementary task,
- an author of the task, such as for instance a human operator, a team or a robot.

The data relative to the environment of a task and/or of an operation may comprise data relative to at least one of the following:
- a presence of a radiological radiation, or toxic/chemical/explosive products,
- environmental data,
- a configuration of the components of the plant.

The method of the invention may further comprise a step of generation of a tridimensional representation of the plant.

It may in particular comprise a representation of the plant with a scaling factor respecting the its real dimension, and comprising:
- a representation of the components of the plants,
- the localization of these components,
- the relations or the structural or functional links between these components.

The method of the invention may further comprise a display of such tridimensional plant's representation, for instance on one or several display screens.

Such plant's representation may be an interactive representation allowing the user to move an avatar, symbolizing an operator, in the plant.

The tridimensional representation of the plant may be generated by any relevant means, such as for instance:
- plans, drawings or CAD models,
- photogrammetric, scene analysis and image segmentation techniques.

The method of the invention may further comprise a memorization or a recording of the interactions of the user with/in the tridimensional representation, and in particular of the move of an avatar controlled by the user.

The method of the invention may be used for performing a technical intervention on at least one of the following items: a nuclear site, a nuclear plant, a chemical site, a chemical plant, a power plant, an airplane, a boat, a submarine, a train, a truck, a car.

More generally, the method of the invention may be used for performing a technical intervention on any relevant industrial or technical site or plant or device.

According to another aspect of the invention, it is proposed a computer program able to be executed on an electronic/computer device, comprising instructions for carrying out the steps of the method of the invention when said computer program is executed on said apparatus.

Such computer program may be coded in any software language, such as for instance C, C++, C#, JAVA...

According to another aspect of the invention, it is proposed a method for performing a technical intervention on a technical plant or a technical device, comprising steps of:
- planning/selection of a scenario according to the method of the invention, and
- execution of said scenario on said plant.

According to still another aspect of the invention, it is proposed a system comprising means adapted to carry on the steps of the method according to the invention.

Such system may comprise a computer fitted with:
- one or several processors and/or calculators fitted with the executable instructions for realizing the steps of the method;
- one or several selection tools, such as a keyboard, a mouse, a 3D mouse, a touchscreen, a touchpad;
- one or several display and visualization means of the tridimensional environment simulating or representing the plant, such as one or several display screens;
- one or several data bases on storage means such as hard disk drives, comprising numerical representations or models of numerical entities, and corresponding respectively, for instance, to :
   (i) a component of the plant,
   (ii) a unitary operation,
   (iii) an element of the environment such as a source of radioactive radiation, a source of possible explosion, a chemical source.

### Description of the drawings

The methods according to embodiments of the present invention may be better understood with reference to the drawings, which are given for illustrative purposes only and are not meant to be limiting. Other aspects, goals and advantages of the invention shall be apparent from the descriptions given hereunder.
- Fig. 1 shows a 3D representation of a technical plant such as modeled in the method of the invention,
- Fig. 2 shows a flow chart of the tasks carried out by the method of the invention,
- Fig. 3 shows a flow chart of the calculations and the data in the method of the invention.

### Detailed description of the invention

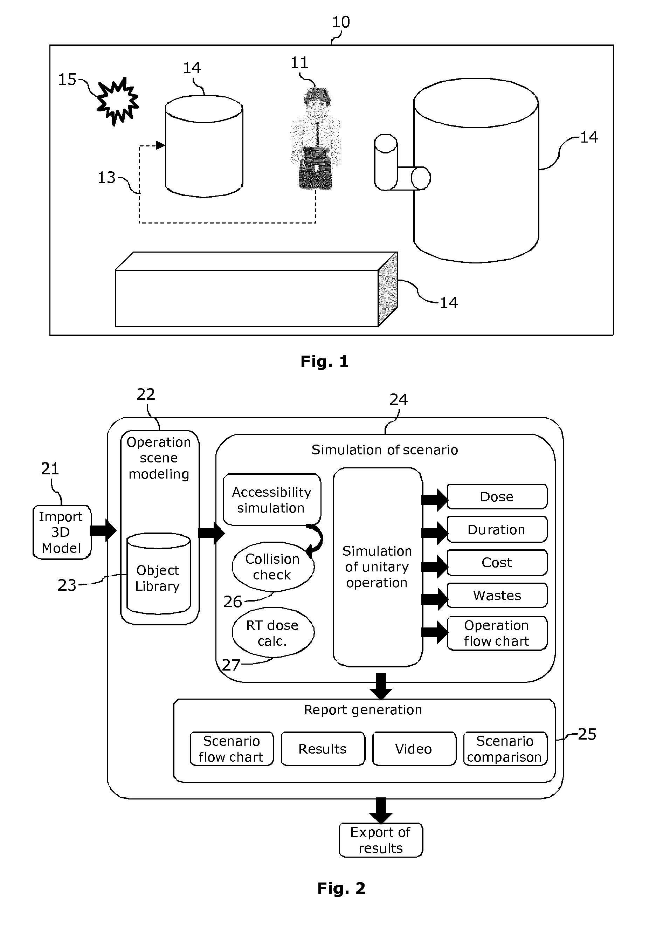

With reference to Fig. 1, Fig. 2 and Fig. 3, we will now describe a detailed mode of realization of the invention for the organization, the evaluation, the planning and the execution of technical interventions on nuclear plants.

This mode of realization is primarily intended for dismantling operations of nuclear plants or nuclear sites.

However, it must be understood that it may also be used for any other kind of interventions on such plants, such as for instance construction, maintenance, upgrade, renovation ans/or ecological design operations.

It is also clear that this mode of realization of the invention provides a frame which may be easily adapted for the organization, the evaluation, the planning and the execution of technical interventions in environments submitted to other risks, such as chemical risks.

As previously explained, the invention provides a method and a tool which allow defining intervention scenarios by simulating the operations and evaluating their consequences. Once defined, the scenarios may be carried out on the real plant.

So, according to the invention, a technical intervention on a technical plant comprises the following steps:
- defining a scenario of the intervention by simulating the operations which make it up on a computer,
- using the information deduced from that scenario, planning the intervention in terms of schedule, human means and material means, and
- executing the operations.

In addition, in case of unexpected event or difficulty during the execution, introduce the new conditions into the simulated scenario, recompute the scenario and adapt the intervention accordingly.

The method of the invention aims at providing the most realistic and reliable scenario, including the estimation of its consequences, by using a global approach which relies on physical and realistic data such as:
- the kind of operations (cutting, handling, ...)
- the means used (equipment, skills and qualification of operators, performances of tools),
- the context (nuclear industry, ...),
- the environment (of the elements or the objects, the risks, ...).

All these contextualization parameters (or at least as much as possible or the relevant ones) are taken into account for computing the scenario and the consequences.

The method of the invention is mostly implemented as simulation software running on a computer. An user interacts with the computer through a Man-Machine Interface (MMI) in order to define, evaluate and compare intervention scenarios.

The method comprises a step 22 of modeling of the operation scene.

The purpose of that modeling step 22 is to provide a tridimensional (3D) representation 10 of the plant, which includes a description as accurate as necessary of that plant and the various equipments which are present in the intervention area.

That 3D representation 10 may be generated manually by the user who runs the simulation method, using an embedded editor.

The embedded editor is well fitter to model quite simple scenes. It comprises an object library 23 with pre-defined components 14 such as for instance tanks, pipes, walls, frames, pumps ..., which may be easily combined.

The method of the invention may also comprise a step 21 of importing of a tridimensional (3D) model of the plant.

The 3D model may be obtained by different sources:
- it may be derived from a theoretical description of the plant, based for instance on plans and/or CAD model of the plant,
- it may use measurement information generated by a 3D scanner or a photogrammetric technique, for instance for obtaining up-to date information on "old" plants.

Of course, the 3D representation 10 of the plant may be obtained by importing a 3D model and by editing it using the embedded editor and the object library 23.

The information on the components 14 used in the 3D representation 10 (either imported or issued from the object library 23) may be enhanced with contextualization information that may be used in the scenarios. Such contextualization information may comprise for instance a provisional classification for waste management, a matter, anything related to a physical dimension (length, width, height, thickness, diameter), a presence at the beginning of the scenario, a radiological shield ...

The 3D representation 10 of the plant may comprise also radiation sources 15 which allow characterizing the radiations present in the scene.

These radiations sources 15 may be placed based on the plant's plans, or manually by the user. They may also be derived from information obtained by measurements.

The radiations sources 15 are characterized in terms of activity and radioactive elements. They may be linked to components 14 or equipments. They may also appear as virtual objects, for instance for modeling punctual radiation sources.

If other risks are taken into account (such as for instance chemical risks), they are also be modeled and managed in the same way.

As illustrated in Fig. 1, the MMI of the simulation software comprises a display of the 3D representation or the scene 10, populated with the defined components 14, and which the user may interact with.

The method of the invention further comprises a step 24 of simulation of scenario.

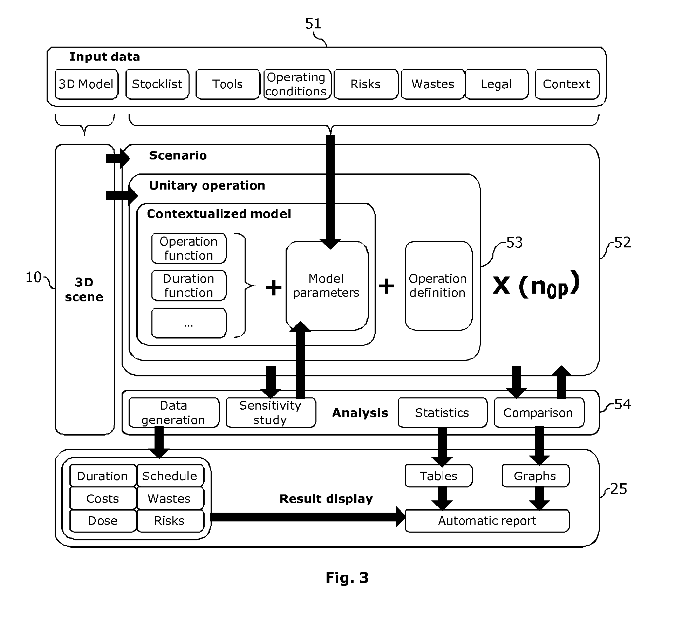

As illustrated on Fig. 3, a scenario 52 comprises a sequence of unitary operations 53. Each unitary operation 53 corresponds to an intervention on at least one component 14 of the scene 10, with an operating condition and a tool or some specific means.

A unitary operation 53 may further be composed by a plurality of unitary tasks.

The computation of the consequences of the scenario comprises the computation of the consequences of the unitary operations 53 (or their unitary tasks).

In order to simulate a scenario, the user interacts with the scene 10 in the MMI by moving an avatar 11 representing the operator or the team. The avatar 11 may be controlled by any relevant input device, such as a mouse, a touchpad, a keyboard, a touchscreen on which the scene is displayed...

For instance, on the example shown on Fig. 1, the user moves the avatar 11 along a trajectory 13, and performs an operation on an element 14.

The avatar 11 is a realistic representation of the operator or of the team, at least to the extent of what is necessary for the execution of the method.

The software further comprises a collision check module 27 which allows verifying that the trajectory 13 proposed by the user is physically feasible. If the avatar 11 collides with an element 14, it is blocked so that the user knows that the move is not possible *in-situ.*

In the same way, during the simulation of the unitary operations 53, the accessibility by the operator is checked using the contextualization data, so that a warning is issued by the software if a unitary operation 53 is attempted at a place where it would be impossible to do it in the real world.

The user can select an avatar 11 which represents an operator adapted to the conditions of intervention.

For instance, a human operator or a team must wear different clothes depending on the risk level. That choice determines its dexterity and the allowed daily work duration. So it affects its productivity.

If the environmental conditions do not allow a human intervention, the user may select a robot operator. That choice conditions also the productivity, the accessibility, the use of specific tools, and the risks (depending on the maintenance conditions for instance).

The consequences of the unitary operations 53 are computed directly so that the user can visualize directly the consequences and the risks of the scenario 52 he is working on, such as:
- the dose of radiations received by the operator,
- the duration of operations, and thus the schedule of the teams,
- the costs, including tools and labor,
- the amount and the kind of wastes, direct and induced, and their valorization,
- the flow chart of the operations.

The scene 10 is updated continuously in function of the results of the unitary operations. For instance, a cut element disappears.

Once a scenario 53 is completed, the method further comprises a step 25 of generation of a report, with:
- a flow chart of the scenario,
- the results in terms of consequences and risks,
- a video showing the simulation of the operations,
- possibly some comparison data with other scenarios.

The reports may be exported in any relevant format for further use, such as Microsoft® Office® formats.

The method further comprises an analysis module 54 which allows doing comparisons and statistics on scenarios.

The analysis module 54 allows also doing sensitivity studies. Once a scenario is defined, it may be recomputed with some changes in the initial input data, such as for instance: the risk area of the level of radiations, different tools or operating conditions ... So, it is possible to check the robustness of a scenario according to work hypothesis or margins of errors of the initial data.

Alternative or backup scenarios may also be created very quickly for handling incidents ...

We will now describe more in details the methodology of the computation of the consequence of the scenario, or their output data.

The method comprises the computation of the duration, then of the risks. Indeed, the exposure to said risks depends on the duration.

The input data 51 is determining for the efficiency of the simulation as it describes the environment of realization or the context of the operations. Basically, that input data 51 is provided by the user. It may of course be stored or organized in libraries, as large parts may be common to several interventions, or sites.

Without being limitative, the input data 51 may comprise:
- the 3D model of the scene,
- a stock-list of items,
- the available tools,
- the operating conditions (depending for instance on the equipment of the operator),
- the risks management constraints,
- the waste management constraints,
- legal and regulations constraints,
- any other relevant context data.

Each unitary operation 53 is split in elementary tasks, the calculation of which uses a physical approach depending on the context given by the input data 51.

For instance, an cutting operation of a tank 14 comprises several elementary tasks such as:
- the preparation of the working area, which depends on the team, the difficulties of the operation, the environment, the risks...
- the installation of the equipment, which depends on the tools, the environment...
- the cutting operation, which depends on the tool, its performances, and the tank 14 (geometry, materials, ...)...
- the evacuation and the conditioning of the wastes, which depend on the size of the packages, the chemical and radiological risks of the cut element 14, the site regulations, the packaging procedures, the contaminated waste containers management procedures...
- the checks, which depend on the environment and the risks.

The scheduling and the "weight" of these tasks depend on the context: for instance the duration of the checks will have a different weight depending if the work is done in an environment with a high or a low radioactivity level, or with a chemical or an explosive risk.

For each of the elementary tasks of an unitary operation 53, calculation functions have been defined (for operation, cost, duration, risk, wastes,...) which takes into account the contextual elements given by the input data 51 (which can be also considered as model parameters). So, advantageously, these functions may be efficiently adapted through the model parameters to a large variety of contexts.

The user defines an unitary operation by successively selecting a kind of operation (cutting, handling...), an element 14 to process, an operating condition (equipment and clothes of human operator(s), model of robot operator(s)), a tool, a team...

The model computes then the consequence data associated with that unitary operation 53.

As previously explained, the definition of several consecutive unitary operations defines a scenario 52.

The calculation of the duration of the operations is very important because it conditions most of the costs of an intervention.

It takes into account:
- an estimate of the time to fulfill the elementary tasks,
- the operating conditions, including the equipment of the operators,
- the regulation concerning the daily duration of work,
- the complexity of the scene and the general configuration of the working environment (which may be narrow, very radioactive...),
- the composition of the team,
- the skills of the operator,
- the constraints related to the element 14 on which the operation is conduced,
- the gains in efficiency for repeated operations.

The calculation of the risks, in the context of the current detailed mode of realization, comprises mainly a calculation of the dose of radioactivity that the operator or the team (represented by the avatar 11) absorbs on the scene 10. That calculation is done by a specific radiation dose calculation module 26 during the simulation of the operations.

It comprises:
- a computation of the instant doses during the displacement of the avatar 11 on the scene. That computation is based on Monte-Carlo simulations, taking into account the location, the radioelement and the activity of the sources, the distance from the operator, the absorption or the attenuation by crossed materials, and the radiological activation of crossed materials by incident ionizing radiation (build-up effect). The calculation is done at the location of the avatar 11;
- a computation of the cumulated doses during unitary operations, based on the location of the operation and its duration.

Absorbed doses of radioactivity related to maintenance operations and waste management is also taken into account.

As previously explained the wastes comprise direct wastes and induced wastes.

Direct wastes are generated by unitary operations, and they are classified during the execution of the scenario according to their risk level (radioactivity, chemical) and the waste management procedures.

Their conditioning and storage depend on the local regulations. These aspects are taken into account in the model using context elements of the input data 51.

Inducted wastes include discarded tools, consumables, and contaminated liquids.

So, all wastes may be evaluated in terms of volume, conditioning and storage costs, and management duration using the model equations and the context elements.

Finally, the costs are evaluated in terms of:
- hourly rate of manpower,
- costs of tools,
- risk mitigation costs,
- costs of wastes.

Advantageously, it should be noted that the method of the invention provides a general framework which may easily be adapted to a large variety of contexts, because the context-related elements are introduced as parameters in the calculations.

Indeed, the model for the computation of the unitary operations 53 or the elementary tasks comprises:
- a function part which describes the physical operation and the tool, and which is fairly independent of the context (a cutting operation in the nuclear industry or in the chemical industry is basically the same),
- a part provided as model parameters which introduces the effect of the context (risk, equipment of the operator, ... which affects for instance the duration and the space needed for the task).

In addition, the context is given by the input data 51, whose data structure is arranged so as to allow codifying all relevant aspects relative to a variety of hazardous environments.

For instance, the context of the chemical industry may also be described by the same input data 51 elements: 3D model, stocklist, tools, operating conditions (for instance specific operators equipment such as protective suits and gasmasks), risks, contaminated wastes, regulations ...

The calculation of the exposure to a chemical risk (for instance) requires to change the corresponding module 26 in the software (or to have several available risk-calculation modules 26), but the risk-related information may be introduced in the same way in the calculation of the consequences of the scenario using for instance the model parameters. And of course several risks (nuclear, chemical, explosive) may be considered simultaneously by using several risk-calculation modules.

While this invention has been described in conjunction with a number of embodiments, it is clear that many alternatives, modifications and variations would be or are apparent to those of ordinary skill in the applicable arts. Accordingly, it is intended to embrace all such alternatives, modifications, equivalents and variations that are within the spirit and scope of this invention.

## Claims

1. A method for performing a technical intervention on a technical plant or a technical device comprising a plurality of components (14) in an environment with a risk factor, said method comprising steps of:
- definition, by simulation using a tridimensional representation (10) of said plant, of at least one scenario (52) comprising a sequence of operations, so-called unitary operations (53), each unitary operation (53) corresponding to an intervention on at least one component (14) of said plant,
- determination of at least one data representing a consequence of at least one scenario (52), said consequence comprising an exposure to said risk factor, said determination comprising steps of:
(a) for at least one unitary operation (53) of said scenario (52):
(i) division of said unitary operation in a sequence of tasks, so-called elementary tasks, in function of data relative to said unitary operation (53),
(ii) for at least one elementary task, determination of at least one data set representing a consequence of said elementary task in function of data relative to the component (14) concerned by said elementary task, data relative to the nature of said elementary task, and data relative to the environment of realization of said elementary task,
(iii) determination of at least one data set representing a consequence of said unitary operation (53), in function of at least one data set representing a consequence of at least one elementary task,
(b) determination of at least one data set representing a consequence of said at least one scenario (52), in function of at least one data set representing a consequence of at least one unitary operation (53) of said scenario.

2. The method of claim 1, wherein, for at least one scenario (52), the step of determination of at least one data set representing a consequence of said scenario (52) is done at the same time as the definition of the scenario (52), said at least one consequence data set being updated along the definition of the scenario (52).

3. The method of any of the preceding claims which is executed for a plurality of scenarios (52), said method further comprising a step of selection of at least one scenario (52) among a plurality of scenarios (52) by comparison of the data sets representing the consequences of each of said scenarios (52).

4. The method of any of the preceding claims, wherein a sequence of elementary tasks of an unitary operation (53) is further arranged depending on data relative to the environment of realization (51) of said unitary operation (53).

5. The method of any of the preceding claims, wherein the definition of an unitary operation (53) part of a scenario (52) comprises:
- a move of an avatar (11) corresponding to a human operator, a team and/or a machine in the tridimensional environment (10) representing the plant or the device,
- a selection of an intervention to be executed on a component (14) of said plant or device, and
- a contextualization of said selected intervention in function of data relative to said component (14) and/or to the environment of realization (51).

6. The method of any of the preceding claims, wherein the data sets representing a consequence of an elementary task or a unitary operation (53) or a scenario (52) comprises data relative to at least one of the following:
- a duration of realization,
- an amount of generated wastes,
- physical characteristics of a generated waste,
- a cost of realization,
- a radiological contamination rate,
- a chemical contamination rate.

7. The method of any of the preceding claims, wherein the data relative to a component (14) of the plant comprises data relative to at least one of the following:
- the physical characteristics of the component,
- the dimensions of the component ,
- a matter of the component,
- the localization of the component,
- at least one function of the component,
- at least relation of said component with at least one other component of said plant.

8. The method of any of the preceding claims, wherein the data relative to an elementary task comprises data relative to at least one of the following:
- a mode of operation,
- a tool for executing the task,
- a preceding or subsequent elementary task,
- an author of the task.

9. The method of any of the preceding claims, wherein the data relative to the environment of a task and/or of an operation comprises data relative to at least one of the following:
- a presence of a radiological radiation or toxic/chemical/explosive products,
- environmental data,
- a configuration of the components (14) of the plant.

10. The method of any of the preceding claims, which further comprises a step of generation of a tridimensional representation (10) of the plant.

11. The method of any of the preceding claims, which is used for performing a technical intervention on at least one of the following items: a nuclear site, a nuclear plant, a chemical site, a chemical plant, a power plant, an airplane, a boat, a submarine, a truck, a car.

12. Computer program able to be executed on an electronic/computer apparatus, comprising instructions for carrying out the steps of the method according to anyone of the claims 1 to 11 when said computer program is executed on said apparatus.

13. Method for performing a technical intervention on a technical plant or a technical device, comprising steps of:
- planning of a scenario (52) according to any of claims 1 to 11, and
- execution of said scenario on said plant.

14. System comprising means adapted to carry on the steps of the method according to anyone of claims 1 to 11.
